# EUROPEAN PATENT APPLICATION

(11) **EP 0 962 876 A2**
(43) Date of publication of application: **08.12.1999**
(21) Application number: 99201405.0
(22) Date of filing: 04.05.1999
(51) Int. Cl.: G06F 17/60

(54) **Measuring system**

(30) Priority: 01.06.1998 GB 9811755
(71) Applicant: Unilever N.V., 3130 AC Vlaardingen (NL); UNILEVER PLC, London EC4P 4BQ (GB)
(72) Inventor: Held, Bjoern, Alter Postweg 25, 21614 Buxtehude (DE)
(74) Representative: Joppe, Hermina L. P.

(57) **Abstract**

A machine measuring system comprising:
(a) storage means for storing a first list of representations (the cue list) and a second list of representations (the target list);
(b) a control system for selecting a representation from the cue list (the cue) and a representation from the second list (the target) and for producing a masking signal (the mask) and for sending these in a predetermined way to:
(c) display means for successively showing the cue followed by the target and the mask in a predetermined way;
(d) input means for receiving and monitoring the responses (S4) induced by displaying the cue and the targets.

## Description

### Technical Field of the Invention

The invention relates to a measuring system, in particular a system for measuring the associative relationship between a first representation (the cue) and a second representation (the target).

### Background to the Invention

For many commercial applications it is important to know how strong particular associations between different representations in the memory of a consumer are.

For example, in the marketing of consumer goods often advertising campaigns are used which are designed to teach the consumer that the product on the market is strongly associated with certain product attributes. For example a new laundry detergent product may be launched with an advertisement campaign aimed at associating the new product with attributes like "clean", "fresh", "white" or "care". For assessing the effectiveness of such an advertising campaign there is a need for a method to determine at certain moments in time how strongly the consumer associates the new product with the desired product attributes.

Traditional methods for assessing consumers' responses rely on various kinds of direct, verbal or self-report measures. For example consumers might be asked to rate how much they like a product or one of its attributes. Although there is no doubt that such traditional methods have value, these methods also have disadvantages in that they often fail to capture consumers' spontaneous reactions to brands and products. In practice consumers rarely consciously focus and explicitly verbalise their responses to products. Rather their reactions are spontaneous and implicit and can often not adequately be measured by traditional methods.

Hence there is a need to develop a machine measuring system which is capable to measure how strong the association is between representations, e.g. to assess the consumers rapid, automatic reactions to products.

In the publication by D.E. Broadbent and M.H.P. Broadbent (1987) 'From detection to identification: Responses to multiple targets in rapid serial visual presentation.' In Perception & Psychophysics, 42, 105-113, test persons in a psychological experiment were shown two targets in short succession and the correct reproduction (verbal report) of the targets was measured. In their experimental set-up, the association between the two targets appeared to have little effect.

In the publication by K.L. Shapiro et al (1997) 'The attentional blink.' In Trends in Cognitive Sciences, Vol. 1, No. 8, a review is given on views regarding the attentional blink.

In the publication by Daniel Kahneman (1968) 'Methods, findings, and theory in studies of visual masking' in the Psychological Bulletin, Vol. 70, No. 6, 404-425, he reviews studies of visual masking. In the publication by C.A. Fowler (1981) in the Journal of Experimental Psychology: General, Vol. 110, No. 3, 341-361 she reviews the use and effects of masks in the judgements of targets.

None of the above publications provide a suitable system for measuring consumer reactions.

The present invention provides a machine measuring system which is capable of measuring the degree of association between representations. Such a system can for example be used to measure the consumers' subconscious perceptions of products. The machine measuring system functions by showing the test-person three successive signals, namely a first representation (the cue) followed by a second representation (the target). The target is followed by a masking signal (the mask) in a predetermined way. Following these three signals, the machine measuring system monitors the reaction of the consumer and stores data of the reaction. At the end of the testing session (which may involve multiple testing cycles and multiple test-persons) the data can be retrieved from the machine measuring system and further processed as needed.

Accordingly, the first aspect the invention relates to a machine measuring system comprising:
(a) storage means for storing a first list of representations (the cue list) and a second list of representations (the target list);
(b) a control system for selecting a representation from the cue list (the cue) and a representation from the second list (the target) and for producing a masking signal (the mask) and for sending these in a predetermined way to:
(c) display means for successively showing the cue followed by the target and the mask in a predetermined way;
(d) input means for receiving and monitoring the responses induced by displaying the cue, the target and the mask.

Preferably the machine system of the invention further comprises:
(e) analysing means for assessing one or more aspects of the input of (d);
(f) storage and/or displaying means for storing or displaying the results of the analysis under (e).

The other features of the invention will be readily apparent from the following description given in conjunction with the accompanying drawings.
Fig. 1 is a diagram illustrating a preferred embodiment of the invention.
Fig. 2 shows a timeline illustrating the sequence of events during a preferred test cycle.

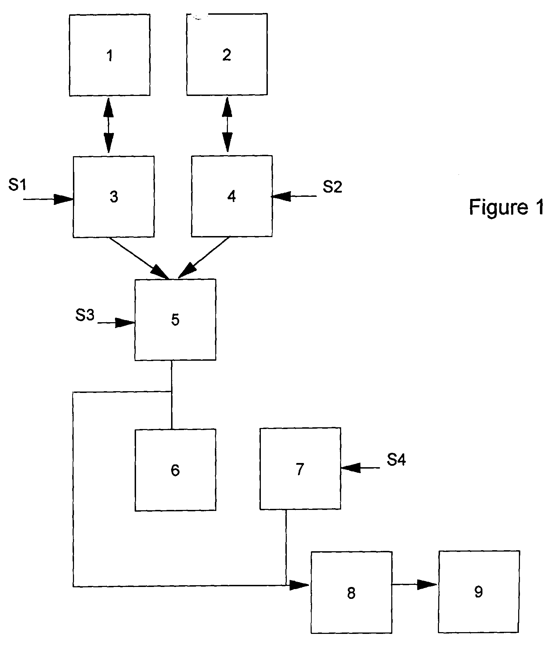

Figure 1 shows storage means 1 to store one or more representations (cues) and storage means 2 to store one or more representations (targets). Both storage means are in contact with data managers 3 and 4, which serve to select one representation from the cue list and one from the target list. If desired the selection from the list may be externally guided by input S1 and S2. The control unit further comprises a signal generator, wherein a masking signal (the mask) is produced. The control unit 5 ensures that the cue and the target representation as well as the mask are successively represented in a predetermined manner at the display 6. Input S3 may be used to guide the control unit. Generally the control unit 5 will comprise a timer element (not shown) for ensuring that the signals are made at specific moments for a predetermined period. After showing the signals on the display 6, the test-person is expected to generate a response S4 which is received in the measuring system by means of a receiver 7 which may, for example, be a microphone for receiving a sound signal or a key-board for receiving typed responses. In a preferred embodiment, input S4 is then feed into analysing means 8. Based on information from the control unit 5 about cue, target, mask and their way of representing and based on input S4 from receiver 7, the analysing means can generate a set of data results which are stored in the results memory 9.

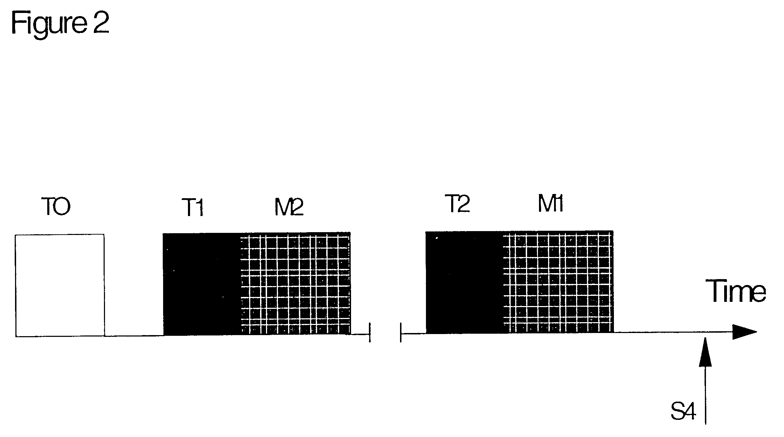

The operation and embodiment of the machine measuring system thus constituted will be described below by referring to Figures 1 and 2.

The cue and target lists will each contain one or more representations. Possible representations may be visual representations such as printed words, pictures or combinations of the two, but representations may also be other than visual, for example, spoken words, sounds, sensory signals or even fragrances or flavours. Representations may also involve a combination of signals, for example a picture in combination with a specific sound. In a preferred embodiment of the invention, both the cue and the target are visually displayed words.

For a specific test cycle, one representation from each list will be selected. Selection may be random, e.g. by using a random selection means, semi-random, for example, alphabetical order or may be guided, for example, by feeding input instructions into the cue and/or target data managers 3 and 4. The selected representation from the cue list is then displayed to the test-person. Any suitable means may be used for this displaying, for example, visual representations can advantageously be displayed on a monitor, sound can be "displayed", e.g. through a speaker system etc.

Preferably the displaying is carefully controlled, e.g. the cue representation is shown for a short predetermined period (T1). In the case of visual representations, for instance, good test results can be obtained by showing the cue representation for a period of at least 10 ms, preferably 40 to 200 ms, more preferred 20 to 150 ms, and most preferred 10 to 100 ms.

Also, for visual representations, prior to showing the cue, a fixation sign, such as a cross in the middle of the display, may be displayed for a period T0 (see Fig. 2) in order to direct the attention of the test person to the place at which the cue will be shown. The period T0 of doing this is not particularly critical and may, for example, range from 0 (milliseconds) ms to 5 seconds, or, for example, 100 ms to 3 second.

After showing the cue, preferably there will be a delay for a second predetermined period. This period is preferably chosen such that the time interval between the start of the cue and the start of the target display is from 40 to 1,500 ms, more preferred 30 to 1,000 ms, and most preferred 20 to 700 ms. During at least part of the interval between the display of the cue and target an optional masking signal (M2) can be shown, for example a sequence of letters without any meaning or a scrambled picture. Normally the duration of the masking signal is from 10 to 1000 ms, more preferred 10-200 ms, and most preferred 10-100 ms.

After the predetermined period the selected target representation will be displayed. Again, the method of displaying can be varied in accordance to the nature of the representation. Advantageously, visual representations can be shown on a monitor for a predetermined period (T2). Good test results can, for example, be obtained by showing visual target representations for a period of 10 to 200 ms, more preferred 20 to 150 ms, most preferred 30 to 100 ms.

Especially preferably the period T1 for showing the cue is similar to the period T2 of showing the target, e.g. they differ less than 50%.

A key element of the testing system of the invention is that directly after displaying the target, a masking signal will be displayed. The period M1 of doing this is not particularly critical and may for example range from 10 ms to 60 seconds, for example 50 ms to 20 seconds. Generally however the duration will more than 10 ms.

After displaying the cue, target and at least part of the mask, the machine system of the invention will wait until the final input (S4) from the test-person is received. This waiting period may coincide with period T3.

The input from the test-person may take any suitable form. For instance, the test-person may type on a key-board, press one or more buttons, or speak into a microphone. It is also possible, to use a combination of input means. Machine systems of the invention will comprise at least one receiver means 7 for receiving the input from the test-person.

After receiving the input by the test-person, the machine system of the invention will preferably analyse this input. For example, the analysing system may determine the time period between the end of period T2 and the moment of receipt of the input. Also, the analysing system may compare the contents of the input with a predetermined set of possible answers.

In a very preferred embodiment of the invention, the test-person will be asked to reproduce both the cue and the target representations. The test-person can start to give input on the cue and the target representations at any moment after period M1. The receiver can advantageously be either a keyboard or a microphone, most preferably a keyboard. The input by the test-person is then compared to the "right answers" both for the cue and for the target. The results of this comparison are then stored into storing means. Possible results can be:
(a) test-person has adequately described cue and target
(b) test-person has only adequately described the cue
(c) test-person has only adequately described the target
(d) neither the cue nor the target are adequately described by the test-person.

Obviously, the definition of adequately describing the cue and target may allow for non perfectly reproduced answers, which nevertheless are close enough to demonstrate semantic processing of cue and target. For example, if the cue was the word "creamy", a reproduction by the test-person of the cue word as "cream" may nevertheless be judged as an adequate description of the target.

The above test can be repeated for a number of test cycles and/or a number of test-persons.

If a number of test-persons is subjected to the same test, the results in terms of correct reproductions of the cue and target words can, for example, be used as a measure for the average association between the cue and the target. Generally in the above test, a very high proportion (e.g. 75% or more) of results (b) to (d) is indicative of non-association between cue and target in the mind of the consumer. A medium high proportion (e.g. 30-75%) is indicative of medium association between cue and target, while a relatively low proportion of false answers (e.g. less than 30%) is indicative of high association between cue and target.

Also the test-person can be asked to do the test multiple times for various cues and targets. For example, the test-person can be subjected to a number of test-cycles involving cue and target representations which normally are regarded as "non-associative", such as "bottle" and "pen", and/or a number of test-cycles involving representations which are normally regarded as "medium-associative", such as "bottle" and "neck", and/or a number of test-cycles involving representations which are normally regarded as "high-associative", such as "bottle" and "beer" as cue and target words, respectively.

For an adequate comparison between various test cycles applicants have found that the following factors may -in addition to the degree of association- influence the results:
- the word length of the target. Generally, the longer the target word the lower the likelihood that it will be correctly reported. Therefore, if a comparison is to be made between various test-cycles then preferably the target words are of equal length or, in the case of target words of different length, a correction factor is applied to correct for the word length factor.
- the word frequency in everyday language of the target. Generally, the higher the word frequency of the target word, the higher the likelihood that it will be correctly reported. Therefore, if a comparison is to be made between various test-cycles then preferably the target words are of comparable word frequency (e.g. less than 20% difference in word frequency) or, in the case of target words of different frequency, a correction factor is applied to correct for the word frequency factor.

Furthermore, it is important that in various test-cycles the time line and method for showing the cue and target are the same to allow a proper comparison.

Results of multiple tests can, for example, be used for the production of an associative map. This is a multi-dimensional map wherein the distance between the various representations corresponds to the degree of association between said representations. An associative map is a very valuable tool for the design and evaluation of, for example, marketing campaigns such as printed or televised advertisements.

In a very preferred embodiment of the invention, the test is applied to more than one test-person, e.g. 2-1000 test-persons, more generally 10-250 test-persons, whereby each test-person is subjected to more than one test-cycle, e.g. 2-100 test-cycles, more generally 2-25 test-cycles.

The machine system of the invention can serve to measure the associative strength between cue and target representations in a very simple and efficient way.

For the application of the machine system to a relatively high number of test-persons it may be advantageous to use a multiple test system, whereby the system comprises multiple means for representing the cues and the targets and multiple means for receiving consumer input. The other means of the system of the invention (e.g. the storage means for the cue and target list and the storage means for the results) can then either be incorporated in each system or be shared between two or more systems. Especially advantageously, the means for storing the results can be shared between more than one sub-system, to facilitate the combination of the results to form and overall test results for more than one test-person.

The invention will now be illustrated by means of the following examples:

### Example 1

The machine system described below can be used to measure the associative strength between words. Test-persons subjected to the system are instructed to report both the cue word and the target word at the end of each test-cycle.

A machine system for measuring the associative strength of words comprises a memory that stores a first list of cue words and a second list of target words. Each cue word (c1, c2, c3, ...) corresponds to three associative terms in the target list (t1a, t1b, t1c, t2a, t2b, t2c, t3a, t3b, t3c, ....). A control unit selects one of the cue words (e.g. c2) and one of the associative target words (e.g. t2c). The control unit then ensures that both cue and target are represented on a monitor as follows:
(1) during a first period T0 of 200 ms a fixation cross is shown in the centre of the screen. After this period the screen goes blank for 300 ms;
(2) After (1), the control unit ensures that the centre of the screen shows a representation of a cue word for a period of 100 ms;
(3) After (2) the control unit generates a masking signal composed of the letter sequence 'NMNMNMNMN' (the mask) for a period of 100 ms, followed by a period of 70 ms wherein no signal is shown (total period between onset of cue and onset of target is 270 ms);
(4) after (3) the control unit ensures that the centre of the screen shows a representation of a target word for a period of 67 ms, followed by a repetition of step (3) for the mask.
(5) keyboard (7) will then receive the answer of the test-person. The control unit will then compare the response words with the original cue (c2) and target (t2c), whereby a positive score for the cue is given when the response substantially corresponds to the cue word (c2) and a positive score for the target is given when the response substantially corresponds to the target word (t2c). The score is stored in the results memory.
(6) Steps (1) to (5) are repeated for the same test-person, but for different combinations for cues and targets. In total 9 combinations are tested.
(7) The same test regime of (1) to (6) is then repeated for a number of other test-persons. In total 100 test-persons are subjected to the test.

The machine system then analyses the results by calculating the proportion of correct reports of cue and target word pairs, whereby both reports of the cue and the target words receive positive scores.
A score of 0-25% of correct reports of cue-target pairs, presented in the same test-cycle, is then ranked as "non-associative" cue-target relationship
A score of 25-70% of correct reports of cue-target pairs, presented in the same test-cycle, is then ranked as "medium-associative" cue-target relationship
A score of 70-100% of correct reports of cue-target pairs, presented in the same test-cycle, is then ranked as "high-associative" cue-target relationship.

The following results are obtained:
Degree of association between terms:
- None:: Butter-Planet; Grass-Paper; Bottle-Pen
- Medium:: Butter-Jam; Grass-Field; Bottle-Neck
- High:: Butter-Bread; Grass-Green; Bottle-Beer

### Example 2

Example 1 can be repeated by replacing one or more of the words that represented the cues or targets, with representations by means of pictures. For example, instead of showing the word "bottle" as cue, a picture of a bottle is shown.

### Example 3

Example 1 can be repeated by changing the environment in which the test takes place. For example, the test is carried out in a test-room wherein a pronounced butter-fragrance is present in the air.

### Example 4

Example 1 can be repeated by using two well-known shampoo brands (B1 and B2) as the cues and two well known associative target terms for shampoo (t1 and t2, e.g. roots and shine) as targets. Both cues are tested against both associative target terms.

The results can show which of the two brands has a stronger association with the target terms. For example, one brand B1 is high-associated with "roots" and non-associated with "shine", while the other brand B2 is medium-associated with "shine" and non-associated with "roots".

### Example 5

Example 1 can be repeated by varying the following conditions:
* instead of displaying the mask after the cue (i.e., step 3 in Example 1), the screen is left blank for a total period of 170 ms between the offset of the cue and onset of the target. This did not substantially influence the results of the test.
* instead of a period of 67 ms, the target is shown for 50 ms. This again did not substantially influence the results of the test.
* instead of a period of 270 ms between the onset of the cue and the onset of the target, this period is lengthened to 700 ms. This lead to an increase in the number of correct answers.

## Claims

1. A machine measuring system comprising:
(a) storage means for storing a first list of representations (the cue list) and a second list of representations (the target list);
(b) a control system for selecting a representation from the cue list (the cue) and a representation from the second list (the target) and for producing a masking signal (the mask) and for sending these in a predetermined way to:
(c) display means for successively showing the cue followed by the target and the mask in a predetermined way;
(d) input means for receiving and monitoring the responses (S4) induced by displaying the cue and the targets.

2. Machine system according to claim 1, further comprising:
(e) analysing means for assessing one or more aspects of the input of (d).

3. Machine system according to claim 2, further comprising:
(f) storage and/or displaying means for storing or displaying the results of the analysis under (e).

4. Use of a machine system of one or more of claims 1-3, wherein the cue is displayed for a period T1, wherein the target is displayed for a period T2 and wherein the mask signal is displayed for a period M1, wherein the following conditions are satisfied:
(a) the period T1 is at least 10 ms;
(b) the period T2 is 10 to 200 ms;
(c) the period M1 is at least 10 ms.

5. Use according to claim 4 wherein T1 is from 10 to 200 ms.

6. Use according to claim 4 wherein T2 is from 10 to 200 ms.

7. Use according to claim 4 wherein the period between the onset of T1 and the onset of T2 is 20 to 700 ms.

8. Use according to claim 4 wherein a second masking signal is shown between T1 and T2, and wherein the duration of said second masking signal (M2) is from 10 to 300 ms.

9. Use according to claim 4, wherein the machine system is used for 2 to 1000 test-persons whereby each test-person is subjected to 2 to 100 test-cycles.

10. Use according to claim 9, wherein a machine system according to claim 3 is used and the results are analysed to produce an associative map.

11. Associative map produced in accordance to claim 10.
